# EUROPÄISCHE PATENTSCHRIFT

(11) **EP 0 522 421 B1**
(45) Veröffentlichungstag und Bekanntmachung des Hinweises auf die Patenterteilung: **15.02.1995**
(21) Anmeldenummer: 92111070.6
(22) Anmeldetag: 30.06.1992
(51) Int. Cl.: F16H 9/14, B65H 54/38

(54) **Verfahren und Getriebe für Textilmaschinen zum Verhindern von Bildwicklungen beim Aufwinden von Fäden**
Method and transmission for textile machines for avoiding pattern windings during the winding of yarns
Procédé et transmission pour machines textiles pour éviter l'enroulage en ruban lors du bobinage de fils

(30) Priorität: 01.07.1991 DE 4121781
(43) Veröffentlichungstag der Anmeldung: 13.01.1993
(73) Patentinhaber: Rieter Ingolstadt Spinnereimaschinenbau AG, 85055 Ingolstadt (DE)
(72) Erfinder: Pohn, Romeo, W-8070 Ingolstadt (DE)

(56) Entgegenhaltungen:
- DE-A- 1 760 524
- FR-A- 2 253 953
- FR-A- 2 287 406
- US-A- 1 822 935
- US-A- 1 966 259
- US-A- 2 091 902
- US-A- 2 437 540
- US-A- 2 868 474
- US-A- 4 515 576

## Beschreibung

### Verfahren und Vorrichtung zur Steuerung der Fadenführer bewegung an Aufspuleinrichtungen zum Verhindern von Bildwicklungen beim Aufwinden von Fäden

Die vorliegende Erfindung betrifft ein Verfahren gemäß dem Oberbegriff von Anspruch 1 sowie einen Riementrieb zur Durchführung des Verfahrens nach Anspruch 2.

Durch die DE-A 1760 524 sind ein Verfahren und eine Vorrichtung zur Steuerung der hin- und hergehenden Fadenführer bewegung von Aufspuleinrichtungen bekannt, wobei die Hin- und Herbewegung des Fadenführers von einer Drehbewegung über einen Riementrieb kontinuierlich verändert wird.

Bei der Bildung von konischen oder zylindrischen Kreuzspulen mit sogenannter wilder Wicklung besteht das Problem, daß insbesondere immer dann, wenn der Durchmesser der Aufwickelspule ein geradzahliges Verhältnis zur Abwicklung der Hin- und Herbewegung des Fadenführers erreicht, die Ablage des Fadens auf der Spule derart erfolgt, daß nacheinander aufgewickelte Garnlagen sehr dicht nebeneinander oder übereinander abgelegt werden. Diese sogenannten Bildwicklungen können bei der Weiterverarbeitung der Spulen zu Störungen führen. Insbesondere beim Abziehen des Fadens können zugleich mehrer Lagen abgezogen werden, was zu Fadenbrüchen führen kann. Um dies zu verhindern, sind in der Praxis sogenannte Störeinrichtungen bekannt, bei denen ein Faden, der mit konstanter Geschwindigkeit einer Aufwickelvorrichtung zum Bilden einer Spule zugeführt wird, mit unterschiedlicher Changiergeschwindigkeit auf der Spule verlegt wird. Dies hat zur Folge, daß der Fadenkreuzungswinkel verändert und das Entstehen von Bildwicklungen verhindert wird.

Aus der DE-A 23 53 234 ist ein Störgetriebe bekannt, bei dem von einer Welle zwei Zahnräder unterschiedlicher Zähnezahl angetrieben werden, wobei eines der Zahnräder mit einem Axialnocken versehen ist, mit dem ein Lenker zusammenarbeitet, der mit einem auf dem den Fadenführer steuernden Exzenter befestigten Mitnehmer im Eingriff steht. Zur Veränderung des Fadenkreuzungswinkels muß praktisch das gesamte Störgetriebe und Fadenführergetriebe ausgetauscht werden. Weiterhin erfolgt die Veränderung der Fadenführergeschwindigkeit in einem vorgegeben Rahmen, der nur mit großem Aufwand verändert werden kann. Die Veränderung der Fadenführergeschwindigkeit ist nicht ausreichend groß.

Durch die bekannte Rotorspinnmaschine RU 14 der Rieter Ingolstadt Spinnereimaschinenbau AG, früher Schubert & Salzer AG Ingolstadt, Deutschland ist ein der DE-A 1760 524 sehr ähnliches Verfahren und ein Getriebe bekannt, bei dem die Drehzahl des Fadenführergetriebes und dadurch die Geschwindigkeit der hin- und hergehenden Fadenführerbewegung dadurch verändert wird, daß ein Störgetriebe vorgeschaltet ist, das als Keilriemengetriebe mit einer Regelscheibe ausgebildet ist. Durch Verändern der Riemenspannung wird der Wirkdurchmesser der Regelscheibe verändert, so daß das Fadenführergetriebe mit veränderter Antriebsdrehzahl angetrieben wird. Durch den Verschleiß des Riemens können bei diesen Getrieben jedoch Veränderungen des Übersetzungsverhältnisses entstehen, wodurch sich das vorgegebene mittlere Übersetzungsverhältnis und damit der gewünschte mittlere Kreuzungswinkel verändert. Der Verschleiß des Riemens macht sich dabei weniger durch Längung der Riemens bemerkbar sondern durch eine Veränderung seiner Flanken. Dabei ändert sich die Breite des Riemens, so daß dieser schmäler wird. Folge davon ist, daß der Riemen in die Keilriemenscheibe tiefer eintaucht. Gleichzeitig sinkt damit zunächst die Riemenspannung, mit der Folge, daß die Regelscheibe, Spreizscheibe die als Federscheibe ausgebildet ist, die sinkende Riemenspannung kompensiert. Dies bedingt, daß der Riemen auf einem größeren Durchmesser der Federscheibe läuft, wodurch das Übersetzungsverhältnis des Riementriebs stark verändert wird. Der Wirkdurchmesser der beiden Riemenscheiben verändert sich dabei gleichzeitig und in der Wirkung verstärkend.

Aufgabe der vorliegenden Erfindung ist es, ein Verfahren zur Steuerung der hin- und hergehenden Fadenführer bewegung sowie einen Riementrieb zur Durchführung des Verfahrens vorzuschlagen, mit denen die zuvor geschilderten Probleme vermieden werden können.

Diese Aufgabe wird erfindungsgemäß gelöst durch das Verfahren des Anspruchs 1 sowie mittels des Riementriebs zur Durchführung des Verfahrens gemäß Anspruch 2.

Durch die Erfindung wird erreicht, daß der Flankenverschleiß des Riemens keinen Einfluß auf das Übersetzungsverhältnis des Riementriebs hat. Der Flankenverschleiß wird durch die Spreizscheibe kompensiert, ohne daß dadurch der Wirkdurchmesser, auf dem der Riemen läuft, verändert wird. Die Spreizscheibe gleicht die verlorengegangene Breite aus und die Riemenspannung bleit erhalten.

Der Riemen des erfindungsgemäßen Störgetriebes arbeitet mit der Antriebsscheibe mit einer anderen Lauffläche zusammen als mit der Abtriebsscheibe des Riementriebs oder auch entsprechend umgekehrt. Dadurch ist das Übersetzungsverhältnis des Riementriebs unabhängig vom Verschleiß des Riemens, weil sich der Flankenverschleiß des Riemens nicht auf den Wirkdurchmesser einer Flachriemen- oder Zahnriemenscheibe auswirken kann. Die Wirkdurchmesser der beiden, die Übersetzung des Getriebes bestimmenden Riemenscheiben, bleiben konstant. Allein durch die steuerbare Spannrolle ändert sich kontrolliert die Übersetzung des Riementriebs. Die Unabhängigkeit vom Verschleiß wird erreicht, weil die Spreizscheibe den Flankenverschleiß durch die die Scheibenhälften steuernde Feder selbsttätig kompensiert und weil die Riemenscheibe mit einer Lauffläche des Riemens zusammenarbeitet, die nicht dem Verschleiß unterliegt. Für die erfindungsgemäße Ausgestaltung des Störgetriebes ist es dabei ohne Belang, ob die Antriebsscheibe oder die Abtriebsscheibe als Spreizscheibe ausgebildet ist, wenn nur die andere Riemenscheibe nicht mit den verschleißbehafteten Flanken des Riemens zur Kraftübertragung zusammenarbeitet.

Besonders vorteilhaft ist es, wenn neben der Spreizscheibe der Riemen mit einer Riemenscheibe zusammenarbeitet, die als Zahnriemenscheibe ausgebildet ist. Dadurch wird erreicht, daß eine sichere Übertragung der Kräfte von Scheibe zu Riemen oder umgekehrt gewährleistet ist. Die Zahnriemenscheibe arbeitet dabei mit einer Mantelfläche des Riemens zusammen, die nicht vom Riemenverschleiß beeinflußt wird. Gegenüber einer Flachriemenscheibe, die ebenso erfindungsgemäß Anwendung finden kann, hat die Zahnriemenscheibe bei ansonsten gleichen Getriebeabmessungen und Drehzahlen den Vorteil, daß höhere Kräfte übertragen werden können, und daß der Riemen daher schmäler als ein Flachriemen ausgebildet werden kann. Eine besonders günstige Ausgestaltung des Getriebes wird erreicht, wenn die Antriebsscheibe als Zahnriemenscheibe und die Abtriebsscheibe als Spreizscheibe ausgebildet wird. Dadurch kann das Getriebe besonders kompakt ausgebildet werden.

Besonders vorteilhaft ist es wenn auch die Spannrolle so ausgebildet ist, daß sie nicht mit den keilriemenartigen Flanken des Riemens zusammenarbeitet. Dies zum Beispiel dann, wenn sie als Flachriemenscheibe ausgebildet ist. Dadurch wird erreicht, daß auch auf der Spannrolle der Riemen auf konstantem Wirkdurchmesser umläuft, so daß die mittlere Spannung des Riemens bzw. das mittlere Übersetzungsverhältnis konstant bleibt.

Besonders vorteilhaft ist es, wenn die Spreizscheibe mit zwei beweglichen Scheibenhälften ausgestattet ist. Dadurch wird erreicht, daß durch Ändern des Übersetzungsverhältnisses Antrieb und Abtrieb weiterhin zueinander fluchtend sind. Besonders kompakt kann das Getriebe ausgebildet werden, wenn ein oder mehrere Treibräder zum Antrieb eines Fadenführergetriebes der Abtriebsscheibe auf einer gemeinsamen Welle angeordnet ist oder sind. In besonders günstiger Weiterbildung des Getriebes ist vorgesehen, daß die Spannrolle zum Verändern der Riemenspannung mittels eines Gestänges betätigt wird, besonders vorteilhaft über ein Zuggestänge. Besonders einfach ist das Getriebe zu justieren, wenn das Gestänge mittels einer Spannschloßmutter in seiner Länge veränderbar ist.

Besonders vorteilhaft, insbesondere zur Übertragung größerer Kräfte, ist es, wenn der Riemen wenigstens auf einer seiner Mantelflächen eine Lauffläche besitzt, mit deren mit einer Riemenscheibe und der Spannrolle zusammenarbeitet. Besonders vorteilhaft ist es dabei, wenn die Lauffläche des Riemens mit einer Verzahnung versehen ist, mit der er mit einer Zahnriemenscheibe zusammenarbeitet. Dadurch ist es möglich, große Kräfte zu übertragen und den Riemen gleichzeitig schmal auszubilden. In besonders günstiger Ausgestaltung ist der Riemen als Breitkeilriemen ausgebildet, wodurch er vorteilhaft sowohl mit der Federscheibe, die als Keilriemenscheibe anzusehen ist, zusammenarbeiten kann, als auch eine günstige Breite besitzt für das Zusammenarbeiten mit einer Flachriemenscheibe. In weiterer günstigen Ausgestaltung ist vorgesehen, daß die Flanken des Riemens unterschiedliche Keilwinkel besitzen. Durch die Verstellung einer der Scheibenhälften der Federscheibe wird nur ein geringer Versatz des Riemens verursacht, wenn einer der Winkel steil ausgebildet wird. Weitere vorteilhafte Ausgestaltungen der Erfindung sind in den übrigen Unteransprüchen beschrieben.

Im folgenden wird die Erfindung anhand von zeichnerischen Darstellungen beschrieben. Es zeigen:
- Figur 1: eine schematische Darstellung eines Bildstörgetriebes
- Figur 2: eine Seitenansicht eines gemäß der Erfindung ausgebildeten Riementriebes
- Figur 3: einen Riemenantrieb eines erfindungsgemäßen Störgetriebes im Schnitt
- Figur 4 bis 7: verschiedene Formen des Riemens gemäß der Erfindung.

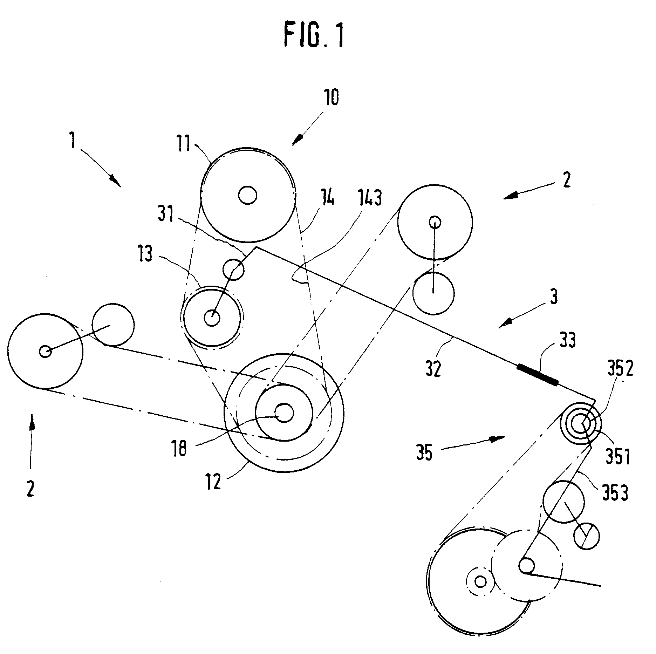

Figur 1 zeigt eine schematische Darstellung eines erfindungsgemäßen Riementriebs 10 in Form eines Störgetriebes 1. Der Riementrieb 10 besteht aus einer Antriebsscheibe 11, einer Abtriebsscheibe 12, die als Spreizscheibe ausgebildet ist, aus einer Spannrolle 13 und einem Riemen 14. Die Abtriebsscheibe 12 ist zusammen mit zwei Zahnriemenscheiben (Treibräder) auf einer Welle 18 montiert. Über die beiden Zahnriemenscheiben werden gleichzeitig zwei Fadenführergetriebe 2 angetrieben. Zur Veränderung der Antriebsgeschwindigkeit der Fadenführergetriebe 2 wird über die Spannrolle 13 der Riemen des Störgetriebes 1 mehr oder weniger gespannt. Dadurch werden die beiden Scheibenhälften der als Spreizscheibe ausgebildeten Abtriebsscheibe 12 auseinander bzw. aufeinander zu bewegt, wodurch der Riemen 14 mehr oder weniger tief in den Keil der Spreizscheibe eintaucht. Dadurch ändert sich der Wirkdurchmesser, auf dem der Riemen 14 läuft, wodurch sich die Drehzahl der Abtriebsscheibe je nach Spannung des Riemens erhöht oder erniedrigt. Die Fadenführergetriebe 2 werden dadurch mit einer veränderten Drehzahl angetrieben. Dies hat zur Folge, daß die Geschwindigkeit des hier nicht gezeigten Fadenführers verändert wird und damit zur Verhinderung von Bildwicklungen der Faden mit wechselndem bzw. verändertem Fadenkreuzungswinkel auf der Spule abgelegt wird. Durch die Veränderung der Riemenspannung mittels der Spannrolle 13 ändert sich also das Übersetzungsverhältnis des Riementriebs 10. Die Veränderung durch die Spannrolle 13 erfolgt über ein Gestänge 3. Dazu sitzt die Spannrolle 13 auf einem Arm eines zweiarmigen Hebels 31. Die Auslenkung der Spannrolle 13 wird durch die Zugstange 32, die am anderen Ende des Hebels 31 angreift, gesteuert.

Die für die Verstellung der Spannrolle erforderliche Bewegung der Zugstange 32 wird durch ein Exzentergetriebe 35 erzeugt. Der Exzenter 351 sitzt dabei auf einer relativ langsam drehenden Welle 352, die beispielsweise die Speisewelle einer Offenend-Spinnmaschine sein kann. Die gleichmäßige Auslenkung der Spannrolle, wie sie durch einen normalen Exzenter verursacht werden würde, wird im vorliegenden Exzentergetriebe seinerseits durch Überlagerung einer weiteren Bewegung variiert. Dazu wird über eine auf dem Exzenter 351 gelagerte, ihrerseits exzentrische Hülse, die die Zugstange 32 steuert, verdreht, wodurch eine zusätzliche Bewegung auf die Zugstange 32 einwirkt. Die Verstellung der Riemenspannung wird dadurch derart verungleichmäßigt, daß praktisch keine Regelmäßigkeiten in der Fadenführerbewegung mehr auftreten. Zur Justierung der Grundspannung des Riemens 14 besitzt das Gestänge 3 ein Spannschloß 33, mit dem die Länge der Zugstange 32 eingestellt wird. Anstelle eines Antriebes der Spannrolle durch ein Gestänge und ein Exzentergetriebe ist es ebenso möglich, die Spannrolle beispielsweise über Nocken zu steuern.

Entsprechend seiner erfindungsgemäßen Ausgestaltung ist die Antriebsscheibe 11 des Störgetriebes 1 als Zahnriemenscheibe ausgebildet, ebenso die Spannrolle 13. Der Riemen 14 besitzt daher auf seiner inneren Mantelfläche 143 eine Verzahnung 142, mit der er mit den beiden Zahnriemenscheiben zusammenarbeitet. Mit der Abtriebsscheibe 12, die als Spreizscheibe ausgebildet ist, arbeitet der Riemen über seine Flanken 141, die keilriemenartig ausgebildet sind, entsprechend wie ein Keilriemen, zusammen. Ebenso könnte aber auch die Antriebsscheibe 11 als Spreizscheibe und die Abtriebsscheibe 12 als Zahnriemenscheibe ausgebildet sein.

Eine andere Ausführungsform der Erfindung bildet ein Störgetriebe, bei dem die Zahnriemenscheiben des oben beschriebenen Riementriebes durch Flachriemenscheiben ersetzt sind. Entsprechend besitzt ein bei einem derartigen Getriebe eingesetzter Riemen eine Lauffläche auf wenigstens einer seiner Mantelflächen, mit der er mit einer Flachriemenscheibe zusammenarbeitet. Bei einem anderen, ebenfalls nicht gezeigten Ausführungsbeispiel des erfindungsgemäßen Riementriebs arbeiten die Riemenscheiben mit der inneren Mantelfläche und den Riemenflanken zusammen, während die Spannrolle auf der äußeren Mantelfläche des Riemens abrollt. Dabei kann die Spannrolle sowohl als Flachriemenscheibe als auch als Zahnriemenscheibe ausgebildet sein, im letzten Fall, wenn der Riemen auch auf seiner äußeren Mantelfläche eine Verzahnung besitzt. Die Wirkung der Erfindung beruht nämlich allgemein darauf, daß, ausgehend von der Erkenntnis, daß der für die Funktion des Getriebes relevante Verschleiß des Riemens die Breite des Riemens im Bereich seiner Flanken verringert, der Riemen mit der durch Verschleiß veränderten Lauffläche mit einer Spreizscheibe zusammenarbeitet, während die übrigen Riemenscheiben mit einer anderen Lauffläche des Riemens zusammenarbeiten, wobei dies ganz besonders für die andere Treibscheibe gilt. Die Auswirkung des Riemenverschleißes auf das Getriebe ist bei Verwendung einer Keilriemenscheibe als Spannrolle nicht so groß, wenn diese im Leertrum des Riementriebs angeordnet ist.

Um die Auswirkungen des Riemenverschleißes möglichst vollständig zu vermeiden, ist es vorteilhaft, daß auch die Spannrolle nicht mit den Flanken des Riemens zusammenarbeitet.

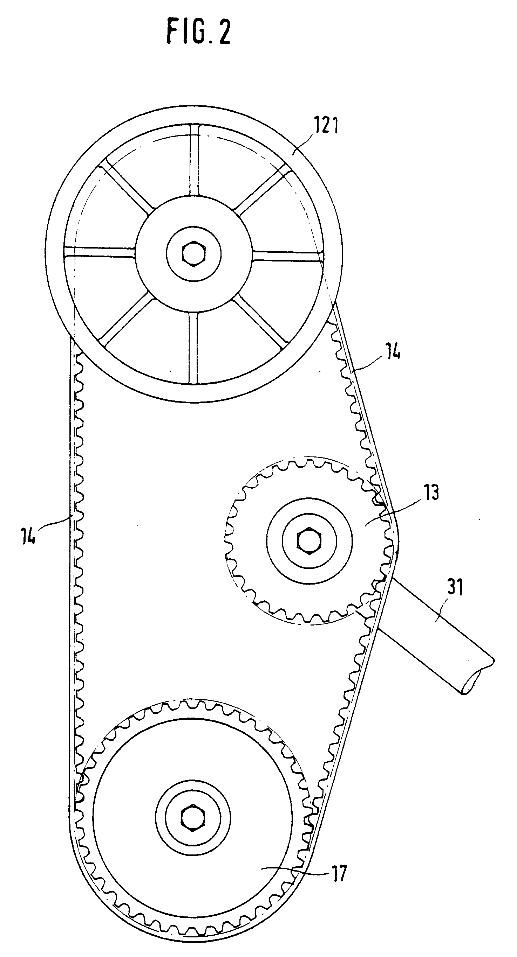

Figur 2 zeigt eine Seitenansicht eines gemäß der Erfindung ausgebildeten Riementriebes mit einer Spreizscheibe 121, einem als Zahnriemen ausgebildeten Riemen 14, einer Zahnriemenscheibe 17 und einer als Zahnriemenscheibe ausgebildeter Spannrolle 13.

Die Spannrolle 13 ist an einem Hebel 31 befestigt, der durch Verschwenken die Spannrolle 13 derart bewegt, daß der Riemen mehr oder weniger ausgelenkt wird. Die Flanken 141 des Riemens 14 sind keilriemenartig ausgebildet und arbeiten mit der als Spreizscheibe 121 ausgebildeten Keilriemenscheibe zusammen. Neben dem Vorteil, daß der Verschleiß des Riemens durch ein derartiges Getriebe kompensiert wird, wird darüber hinaus erreicht, daß bei Verwendung von einer Spreizscheibe 121 mit nur einer beweglichen Scheibenhälfte der Versatz des Riemens, der durch das Öffnen und Schließen der Spreizscheibe bedingt wird, dadurch kompensiert wird, daß der Riemen axial auf den Zahnriemenscheiben wandern kann, so daß der Riemen keinen Versatz quer zur Laufrichtung erfährt. Dazu sind die Zahriemenscheibe 17 und die Spannrolle 13 so breit ausgebildet, daß der Riemen 14 bei jeder Stellung der Spreizscheibe 121 voll auf der Zahnriemenscheibe 17 bzw. der Spannrolle 13 aufliegt. Dieser Vorteil wird auch bei Verwendung von hier nicht gezeigten Flachriemenscheiben bei entsprechender Ausgestaltung der Laufflächenbreite der Riemenscheibe erreicht.

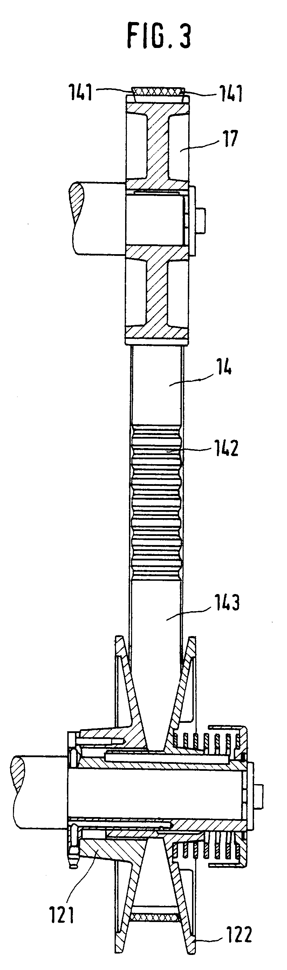

Figur 3 zeigt einen Riementrieb eines erfindungsgemäß ausgestalteten Störgetriebes im Schnitt. Der Riemen 14 ist als Zahnriemen ausgebildet, wobei die Verzahnung 142 auf seiner inneren Mantelfläche 143 angeordnet ist. Der Riemen 14 arbeitet mit einer Zahnriemenscheibe 17 über seine Verzahnung zusammen. Mit seinen Flanken 141 greift der Riemen in einen Keilspalt einer Spreizscheibe 121, 122 ein. Die Spreizscheibe 121, 122 ist hier als einseitig öffnende Spreizscheibe 121, 122 ausgebildet. Ein durch höhere Riemenspannung verursachtes tieferes Eindringen des Riemens 14 in die Spreizscheibe 121, 122 bewirkt, daß sich dessen bewegliche Scheibenhälfte 122 nach rechts bewegt, wobei gleichzeitig der Riemen ebenfalls nach rechts wandert. Durch eine genügend breite Ausgestaltung der Zahnriemenscheibe 17 wird erreicht, daß ein derartiger Versatz des Riemens keine negativen Auswirkungen auf den Riementrieb hat. Entsprechendes gilt auch für die Ausgestaltung der Spannrolle 13. Welche der beiden Riemenscheiben 17 oder 121, 122 Antriebsscheibe und welche Abtriebsscheibe des Riementriebes ist, ist für die vorliegende Erfindung ohne Belang.

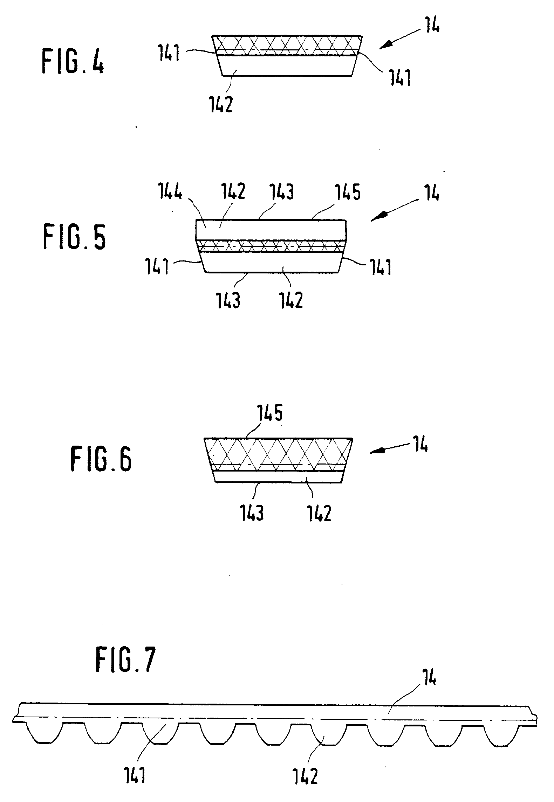

Die Figuren 4 bis 6 zeigen verschiedene Ausbildungsformen eines Riemens gemäß der Erfindung. Der Riemen 14 von Figur 4 ist als Breitkeilriemen ausgebildet und besitzt für das Zusammenarbeiten mit einer Keilriemenscheibe zwei Flanken 141 und eine Verzahnung 142, mit der er mit einer Zahnriemenscheibe zusammenarbeiten kann. Der Riemen 14 von Figur 5 besitzt ebenfalls zwei Flanken 141, um beispielsweise mit einer Spreizscheibe zusammenzuarbeiten, sowie sowohl auf seiner äußeren Mantelfläche 145 als auf seiner inneren Mantelfläche 143 eine Verzahnung 142. Die Flanken der äußeren Verzahnung 144 sind bei diesem Riemen 14 beispielsweise nicht dazu geeignet, mit einer Keilriemenscheibe zusammenzuarbeiten. Figur 6 zeigt einen Riemen 14 mit besonders dickem Rücken. Auf seiner inneren Mantelfläche 143 besitzt er eine Verzahnung 142. Seine äußere Mantelfläche 145 ist als Lauffläche ausgebildet, die mit einer Flachriemenscheibe zusammenarbeiten kann. Dies kann beispielsweise eine Spannrolle sein oder eine weitere Riemenscheibe des Riementriebes. Figur 7 zeigt eine Seitenansicht eines Teils eines Riemens 14 mit einer Verzahnung 142, die auf der inneren Mantelfläche des Riemens angeordnet ist. Die gesamte Seitenfläche des Riemens 14 bildet die Flanke 141, mit der er mit einer Keilriemenscheibe zusammenarbeitet. Der Einsatz der Erfindung ist nicht nur auf eine beispielhaft angesprochene Offenend-Spinn-/Spulmaschine beschränkt, sondern auch bei anderen Textilmaschinen, wo eine hin- und hergehende Verlegung eines Faden zur Vermeidung von Ablagefehlern variiert werden muß, möglich.

Bei Versuchen mit dem erfindungsgemäßen Riementrieb hat sich gezeigt, daß es möglich ist, eine eingestellte Drehzahl über mehrere
Monate hinweg praktisch konstant zu halten, mit einer Drehzahlabweichung von weniger als 1 %.

## Patentansprüche

1. Verfahren zur Steuerung der hin- und hergehenden Fadenführerbewegung von Aufspuleinrichtungen zum Aufspulen von Fäden auf Kreuzspulen, bei dem die Hin- und Herbewegung des Fadenführers von einer Drehbewegung abgeleitet wird und die Übersetzung der Drehbewegung über einen Riementrieb kontinuierlich verändert wird, dadurch gekennzeichnet, daß zur selbständigen Kompensation des Riemenverschleißes der Riemen über eine Zahn- oder Flachriemenscheibe und eine druckbelastete Spreizscheibe geführt wird und die durch den Verschleiß bedingte geringere Breite des Riemens durch eine Verkleinerung des Abstandes der Scheibenhälften der Spreizscheibe ausgeglichen wird.

2. Riementrieb zur Durchführung des Verfahrens gemäß Anspruch 1, dadurch gekennzeichnet, daß der Riementrieb (10) eine Antriebsscheibe (11; 12), einen Riemen (14), eine Abtriebsscheibe (12; 11) und eine unmittelbar auf den Riemen einwirkende Spannrolle (13) zum kontinuierlichen Ändern des Übersetzungsverhältnisses besitzt, wobei eine der Scheiben (11; 12) als Zahn- oder Flachriemenscheibe und die andere Scheibe (12; 11) als zwei Scheibenhälften aufweisende Spreizscheibe (121, 122) ausgebildet ist und wobei der Riemen (14) eine mit der Zahn- oder Flachriemenscheibe zusammenarbeitende Lauffläche (142, 143, 144, 145) sowie keilriemenartige Flanken (141) besitzt, mit denen er mit der Spreizscheibe (121, 122) zusammenarbeitet.

3. Riementrieb nach Anspruch 2, dadurch gekennzeichnet, daß die Antriebsscheibe (11) als Zahnriemenscheibe und die Abtriebsscheibe (12) als Spreizscheibe (121, 122) ausgebildet sind.

4. Riementrieb nach Anspruch 2 oder 3, dadurch gekennzeichnet, daß die Spreizscheibe (121, 122) zwei bewegliche Scheibenhälften besitzt.

5. Riementrieb nach einem oder mehreren der Ansprüche 2 bis 4, dadurch gekennzeichnet, daß der Abtriebsscheibe (12) ein Treibrad oder mehrere Treibräder zum Antrieb eines Faden führergetriebes oder mehrerer Fadenführergetriebe (2) auf einer gemeinsamen Welle (18) zugeordnet ist oder sind.

6. Riementrieb nach einem oder mehreren der Ansprüche 2 bis 5, dadurch gekennzeichnet, daß die Spannrolle (13) als Zahn- oder Flachriemenscheibe ausgebildet ist, so daß sie nicht mit den keilriemenartigen Flanken (141) des Riemens (14) zusammenarbeitet.

7. Riementrieb nach einem oder mehreren der Ansprüche 2 bis 6, dadurch gekennzeichnet, daß die Spannrolle über ein Gestänge (3, 32) zur Veränderung der Riemenspannung verstellbar ist.

8. Riementrieb nach Anspruch 7, dadurch gekennzeichnet, daß das Gestänge (3) über einen Exzenter (351) oder Nocken gesteuert wird.

9. Riementrieb nach einem oder mehreren der Ansprüche 2 bis 8, dadurch gekennzeichnet, daß der Riemen (14) mit einer Verzahnung (142, 144) versehen ist.

10. Riementrieb nach einem oder mehreren der Ansprüche 2 bis 9, dadurch gekennzeichnet, daß der Riemen (14) als Breitkeilriemen ausgebildet ist.

11. Riementrieb nach einem oder mehreren der Ansprüche 2 bis 10, dadurch gekennzeichnet, daß die Flanken (141) des Riemens (14) unterschiedliche Keilwinkel besitzen.

12. Riementrieb nach einem oder mehreren der Ansprüche 2 bis 11, dadurch gekennzeichnet, daß die Spreizscheibe (121, 122) einseitig öffnend ausgebildet ist und die dazugehörige Zahn- oder Flachriemenscheibe eine so breite Lauffläche für den Riemen (14) besitzt, daß trotz Versatz des Riemens (14) infolge der Veränderung der Breite der Spreizscheibe (121, 122) ein ungestörtes Zusammenarbeiten von Riemen und Riemenscheibe gewährleistet ist.

## Claims

1. Method of controlling the to-and-fro thread guide movement of winding-on devices for winding threads onto cross-wound bobbins, in which the to-and-fro movement of the thread guide is derived from a rotary movement and the transmission of the rotary movement is continuously altered by way of a belt drive, characterized in that for the automatic compensation of the belt wear the belt is guided by way of a toothed belt pulley or flat belt pulley and a pressure-loaded expanding pulley and the smaller width of the belt caused by the wear is compensated by reducing the spacing between the pulley halves of the expanding pulley.

2. Belt drive for carrying out the method according to Claim 1, characterized in that the belt drive (10) has a driving pulley (11: 12), a belt (14), a driven pulley (12; 11) and a tensioning roller (13), acting directly on the belt, for continuously altering the transmission ratio, wherein one of the pulleys (11; 12) is constructed as a toothed belt pulley or flat belt pulley and the other pulley (12; 11) is constructed as an expanding pulley (121, 122) having two pulley halves, and wherein the belt (14) has a running surface (142, 143, 144, 145) cooperating with the toothed belt pulley or flat belt pulley and V-belt-type flanks (141) by means of which it cooperates with the expanding pulley (121, 122).

3. Belt drive according to Claim 2, characterized in that the driving pulley (11) is constructed as a toothed belt pulley and the driven pulley (12) is constructed as an expanding pulley (121, 122).

4. Belt drive according to Claim 2 or 3, characterized in that the expanding pulley (121, 122) has two movable pulley halves.

5. Belt drive according to one or more of Claims 2 to 4, characterized in that a drive wheel or a plurality of drive wheels for driving a thread guide gearing or a plurality of thread guide gearings (2) on a common shaft (18) is or are associated with the driven pulley (12).

6. Belt drive according to one or more of Claims 2 to 5, characterized in that the tensioning roller (13) is constructed as a toothed belt pulley or flat belt pulley, so that it does not cooperate with the V-belt-type flanks (141) of the belt (14).

7. Belt drive according to one or more of Claims 2 to 6, characterized in that the tensioning roller can be adjusted by way of a rod assembly (3, 32) in order to alter the belt tension.

8. Belt drive according to Claim 7, characterized in that the rod assembly (3) is controlled by way of an eccentric (351) or cam.

9. Belt drive according to one or more of Claims 2 to 8, characterized in that the belt (14) is provided with a toothing (142, 144).

10. Belt drive according to one or more of Claims 2 to 9, characterized in that the belt (14) is constructed as a wide V-belt.

11. Belt drive according to one or more of Claims 2 to 10, characterized in that the flanks (141) of the belt (14) have different wedge angles.

12. Belt drive according to one or more of Claims 2 to 11, characterized in that the expanding pulley (121, 122) is constructed to open on one side and the associated toothed belt pulley or flat belt pulley has a running surface for the belt (14) of a width such that a smooth cooperation of belt and belt pulley is ensured despite an offset of the belt (14) as a result of the alteration of the width of the expanding pulley (121, 122).

## Revendications

1. Procédé pour commander le mouvement alternatif de guide-fils de dispositifs de bobinage conçus pour enrouler des fils sur des bobines croisées, dans lequel le mouvement alternatif du guide-fils est dérivé d'un mouvement rotatoire, et la démultiplication du mouvement rotatoire est modifiée en continu par l'intermédiaire d'une transmission par courroie, caractérisé par le fait que, en vue de la compensation automatique de l'usure de la courroie, ladite courroie est guidée par l'intermédiaire d'une poulie pour courroie crantée ou lisse, et d'un disque d'écartement sollicité par une pression, et la largeur plus faible de la courroie, due à l'usure, est compensée par une diminution de l'espacement entre les moitiés du disque d'écartement.

2. Transmission par courroie pour la mise en oeuvre du procédé selon la revendication 1, caractérisée par le fait que ladite transmission (10) par courroie comprend un disque menant (11 ; 12), une courroie (14), un disque mené (12 ; 11) et un rouleau tendeur (13) agissant directement sur la courroie pour faire varier en continu le rapport de démultiplication, l'un (11 ; 12) des disques étant réalisé sous la forme d'une poulie pour courroie crantée ou lisse, et l'autre disque (12 ; 11) étant conçu sous la forme d'un disque d'écartement (121, 122) muni de deux moitiés, et la courroie (14) présentant une surface de défilement (142, 143, 144, 145) coopérant avec la poulie pour courroie crantée ou lisse, ainsi que des flancs tronconiques (141) par lesquels elle coopère avec le disque d'écartement (121, 122).

3. Transmission par courroie selon la revendication 2, caractérisée par le fait que le disque menant (11) est réalisé sous la forme d'une poulie pour courroie crantée, le disque mené (12) étant conçu sous la forme d'un disque d'écartement (121, 122).

4. Transmission par courroie selon la revendication 2 ou 3, caractérisée par le fait que le disque d'écartement (121, 122) comprend deux moitiés mobiles.

5. Transmission par courroie selon l'une ou plusieurs des revendications 2 à 4, caractérisée par le fait qu'une roue d'entraînement ou plusieurs roues d'entraînement est ou sont affectée(s) au disque mené (12), sur un arbre commun (18), en vue d'entraîner une transmission de guide-fils ou plusieurs transmissions (2) de guide-fils.

6. Transmission par courroie selon l'une ou plusieurs des revendications 2 à 5, caractérisée par le fait que le rouleau tendeur (13) est réalisé sous la forme d'une poulie pour courroie crantée ou lisse, de sorte qu'il ne coopère pas avec les flancs trapézoïdaux (141) de la courroie (14).

7. Transmission par courroie selon l'une ou plusieurs des revendications 2 à 6, caractérisée par le fait que le rouleau tendeur est réglable par l'intermédiaire d'une tringlerie (3, 32), en vue de faire varier la tension de la courroie.

8. Transmission par courroie selon la revendication 7, caractérisée par le fait que la tringlerie (3) est commandée par l'intermédiaire d'un excentrique (351) ou de cames.

9. Transmission par courroie selon l'une ou plusieurs des revendications 2 à 8, caractérisée par le fait que la courroie (14) est pourvue d'un crantage (142, 144).

10. Transmission par courroie selon l'une ou plusieurs des revendications 2 à 9, caractérisée par le fait que la courroie (14) est réalisée sous la forme d'une courroie trapézoïdale à crans larges.

11. Transmission par courroie selon l'une ou plusieurs des revendications 2 à 10, caractérisée par le fait que les flancs (141) de la courroie (14) présentent des angles de dépouille différents.

12. Transmission par courroie selon l'une ou plusieurs des revendications 2 à 11, caractérisée par le fait que le disque d'écartement (121, 122) est réalisé avec ouverture unilatérale et la poulie associée, pour courroie crantée ou lisse, possède, pour la courroie (14), une surface de défilement suffisamment large pour qu'une coopération sans perturbation soit garantie, entre la courroie et la poulie, malgré un décalage de la courroie (14) suite à la variation de largeur du disque d'écartement (121, 122).
